# EUROPEAN PATENT APPLICATION

(11) **EP 4 501 519 A1**
(43) Date of publication of application: **05.02.2025**
(21) Application number: 23778899.7
(22) Date of filing: 10.02.2023
(51) Int. Cl.: B23K 26/00, B23K 26/38

(54) **MACHINING SYSTEM AND MACHINABILITY DETERMINATION SYSTEM**

(30) Priority: 30.03.2022 JP 2022056411
(71) Applicant: Amada Co., Ltd., Isehara-shi, Kanagawa 259-1196 (JP)
(72) Inventor: WAKE, Koichi, Isehara-shi, Kanagawa 259-1196 (JP); YOSHIDA, Takeshi, Isehara-shi, Kanagawa 259-1196 (JP); WAKUI, Hirotada, Isehara-shi, Kanagawa 259-1196 (JP)
(74) Representative: Grünecker Patent- und Rechtsanwälte PartG mbB
(86) International application number: PCT/JP2023/004541
(87) International publication number: WO 2023/188865

(57) **Abstract**

A machining system includes: a machining device configured to machine a workpiece; an acquisition device configured to acquire composition information representing the chemical composition of the material of the workpiece; and a determination device configured to determine the machinability of the workpiece based on a determination model created by inputting the composition information, processing condition information including processing conditions preset according to the material and thickness, and a machining quality evaluation result obtained by actually machining based on the processing conditions, as teaching data and performing machine learning. The determination device is configured to input composition information acquired before the machining of a workpiece to be newly machined and processing condition information including processing conditions set in the machining device according to the material and thickness, as data for estimation, to the determination model, and output a determination result regarding machinability based on the processing conditions of the machining to be performed.

## Description

### Technical Field

The present invention relates to a machining system and a machinability determination system.

### Background Art

Conventionally, in a machining device such as a laser processing machine, processing conditions are generally preset according to the material and thickness of a workpiece. Consequently, an operator of the machining device selects processing conditions that are suited to the material and thickness of the workpiece, or the machining device performs machining under processing conditions as instructed by a machining program. However, even for workpieces having a material with the same name and the same thickness, good machining quality may not be obtained under the processing conditions prepared in advance for a machining machine due to individual differences in country, manufacturer, production lot, storage condition, and the like. On the other hand, a technology is also known in which, after processing conditions suited to the material and thickness of a workpiece are selected, the actual material and thickness of the workpiece are measured, and then the selected processing conditions are modified according to the measurement results (see Patent Literature 1).

### Citation List

### Patent Literature

Patent Literature 1: Japanese Patent No. 6754614

### Summary

### Technical Problem

However, with the device disclosed in Patent Literature 1 described above, although the processing conditions that have been selected according to the material and thickness of the workpiece can be modified based on the actually measured material and thickness, Patent Literature 1 does not envision the determination of what level of machining quality would be obtained if the selected processing conditions are not modified.

That is, the conventional art described above does not determine the machinability (degree of suitability for machining) itself of the workpiece based on the selected processing conditions in correspondence with the individual differences (variations in quality) in the actual workpieces, which differ by manufacturer, production lot, and storage condition, for example. Consequently, there is a problem in that, without trial machining, the operator cannot determine the machinability based on the processing conditions of a workpiece before machining and based on the determination result decide whether to continue machining with the set processing conditions or change to processing conditions suited to the workpiece.

One aspect of the present invention is a machining system and machinability determination system that can determine the machinability based on the processing conditions of a workpiece before machining and facilitate the decision of whether the workpiece should be machined under the current processing conditions or the processing conditions should be changed to suit to the workpiece, thereby reducing processing defects.

### Solution to Problem

A machining system according to one aspect of the present invention includes: a machining device configured to machine a workpiece; an acquisition device configured to acquire composition information representing the chemical composition of the material of the workpiece; and a determination device configured to determine the machinability of the workpiece based on a determination model created by inputting the composition information about the workpiece acquired by the acquisition device, processing condition information including processing conditions of the machining device preset according to the material and thickness of the workpiece, and a machining quality evaluation result obtained by actually machining the workpiece based on the processing conditions, as teaching data, and performing machine learning based on the teaching data. The determination device is configured to input composition information acquired by the acquisition device before the machining of a workpiece to be newly machined and processing condition information including processing conditions set in the machining device according to the material and thickness of the workpiece as data for estimation, to the determination model, and output a determination result regarding machinability based on the processing conditions of the machining to be performed by the machining device.

In the machining system according to one aspect of the present invention, the machinability of a workpiece is determined by the determination device based on a determination model created after machine learning is performed based on teaching data containing composition information about the material of the workpiece acquired by the acquisition device, processing condition information including the processing conditions of the machining device preset according to the material and thickness of the workpiece, and the machining quality evaluation results obtained by actually machining the workpiece based on the processing conditions. In the determination device, composition information acquired by the acquisition device before the machining of a workpiece to be newly machined and processing condition information including processing conditions set in the machining device according to the material and thickness of the workpiece are input as data for estimation to the determination model, and thus a determination result regarding machinability is output based on the processing conditions of the machining to be performed by the machining device. This arrangement allows for a determination of the machinability based on the processing conditions of a workpiece before machining and facilitates the decision of whether the actual machining should be performed under the current processing conditions or the processing conditions should be changed to suit to the workpiece, thereby reducing processing defects.

### Advantageous Effects of Invention

According to one aspect of the present invention, it is possible to determine the machinability based on the processing conditions of a workpiece before machining and facilitate the decision of whether the workpiece should be machined under the current processing conditions or the processing conditions should be changed to suit to the workpiece, thereby reducing processing defects.

### Brief Description of Drawings

[Figure 1] Figure 1 is an explanatory diagram illustrating a basic configuration of a machining system according to an embodiment of the present invention.
[Figure 2] Figure 2 is a schematic functional block diagram of the machining system according to the present embodiment.
[Figure 3] Figure 3 is a block diagram illustrating a schematic configuration of a machinability determination system used in the machining system according to the present embodiment.
[Figure 4] Figure 4 is an explanatory diagram illustrating a basic hardware configuration of a machinability determination unit, a learning device, and/or a machinability determination system.
[Figure 5] Figure 5 is an explanatory diagram illustrating how composition information about a workpiece is acquired.
[Figure 6] Figure 6 is a diagram illustrating examples of standard processing conditions for machining according to the material and thickness of a workpiece.
[Figure 7] Figure 7 is an explanatory diagram representing a quality evaluation standard for machining quality.
[Figure 8] Figure 8 is a diagram illustrating an example of evaluation results.
[Figure 9] Figure 9 is a flowchart illustrating an example of a machinability determination.
[Figure 10] Figure 10 is a flowchart illustrating another example of a machinability determination.
[Figure 11] Figure 11 is a diagram illustrating verification results regarding machinability determinations.
[Figure 12] Figure 12 is a diagram illustrating confirmation results regarding the quality of a cut surface.
[Figure 13] Figure 13 is a diagram illustrating determination results and confirmation results.

### Description of Embodiments

Hereinafter, a machining system and machinability determination system according to embodiments of the present invention will be described in detail, with reference to the attached drawings. However, the following embodiments do not limit the invention according to the claims, and not all of the combinations of features described in the embodiments are essential to the solution of the invention. In the following embodiments, the arrangement, scale, dimensions, and the like of each component may be illustrated in an exaggerated or undersized form, and a description of some components may be omitted.

### [Basic configuration of machining system]

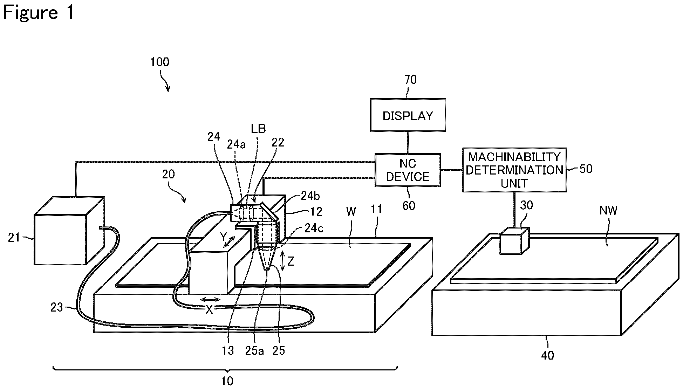

Figure 1 is an explanatory diagram illustrating a basic configuration of a machining system according to an embodiment of the present invention.

As illustrated in Figure 1, a machining system 100 includes: a laser processing machine (laser processing device) 10 as a machining device configured to perform cutting, drilling, and other machining of the material of workpieces NW, W; and a shuttle table 40 which is adjacent to the laser processing machine 10 and on which pallets (not illustrated) are mounted to load and unload the workpieces NW, W. The machining system 100 also includes: an X-ray fluorescence device 30 as an acquisition device configured to acquire composition information representing the chemical composition of the material of the workpiece NW mounted on the shuttle table 40; and a machinability determination unit 50 as a determination device configured to determine the machinability of the workpiece NW based on the composition information about the workpiece NW from the X-ray fluorescence device 30. The machining system 100 further includes: an NC device 60 configured to control the laser processing machine 10, the X-ray fluorescence device 30, and the machinability determination unit 50; and a display 70 configured to display various information. Note that the machinability determination unit 50 and the NC device 60 may also be built into the laser processing machine 10.

For example, when the workpiece NW is steel, iron (Fe) is included as the main component, and when the workpiece NW is non-ferrous metal aluminum alloy steel, aluminum (Al) is included as the main component. In addition to these main components, the workpiece NW contains elements intentionally added by the manufacturer and elements mixed in as impurities. In the present embodiment, these main components, additive elements, and impurity elements that make up steel or a non-ferrous metal are referred to as the "chemical composition" or simply the "composition".

The laser processing machine 10 includes a machining table 11 on which the workpiece W such as sheet metal is mounted, and an X-axis carriage 12 configured to move relative to the machining table 11 in the longitudinal direction of the machining table 11, that is, the X-axis direction in the diagram. The laser processing machine 10 also includes a Y-axis carriage 13 configured to move upon the X-axis carriage 12 in the transverse direction of the machining table 11, that is, the Y-axis direction in the diagram, and a laser processing unit 20 configured to perform laser processing by irradiating the workpiece W with a laser beam LB.

The laser processing unit 20 is provided with a laser oscillator 21 configured to generate and emit the laser beam LB, and a laser processing head 22 which is mounted on the Y-axis carriage 13 and which is configured to move in the X-axis and Y-axis directions by the X-axis carriage 12 and the Y-axis carriage 13. The laser processing unit 20 is provided with a process fiber 23 configured to transmit the laser beam LB generated by the laser oscillator 21 to the laser processing head 22. The laser processing machine 10 is also provided with an assist gas supply device (not illustrated) configured to supply an assist gas.

The laser oscillator used as the laser oscillator 21 is, for example, a type in which a seed light emitted from a laser diode excites and amplifies Yb (ytterbium) or the like in a resonator to emit the laser beam LB at a predetermined wavelength, or a type that directly uses the laser beam LB emitted from a laser diode.

The laser oscillator 21 of the present embodiment emits the laser beam LB in a 1 µm band with a wavelength of 900 nm to 1100 nm. For example, a direct diode laser (DDL) oscillator emits the laser beam LB with a wavelength of 910 nm to 950 nm, while a fiber laser oscillator emits the laser beam LB with a wavelength of 1060 nm to 1080 nm. A blue semiconductor laser emits the laser beam LB with a wavelength of 400 nm to 460 nm. A green laser may be a fiber laser oscillator or a DDL oscillator that emits the laser beam LB with a wavelength of 500 nm to 540 nm, or a multi-wavelength resonator optically combined with the laser beam LB in the 1 µm band. Additionally, the laser oscillator 21 emits a guide beam GB (for example, 650 nm wavelength) to confirm the position on the workpiece W at which the laser beam LB is emitted (omitted from illustration).

The laser processing head 22 includes a beam control unit 24. The beam control unit 24 functions to control the laser beam LB to have a spot diameter and divergence angle suited to the material of the workpiece W. The beam control unit 24 includes a collimator lens 24a into which the laser beam LB emitted from the output end of the process fiber 23 enters and through which the laser beam LB is converted into a collimated beam. The beam control unit 24 includes a bend mirror 24b by which the substantially collimated laser beam LB emitted from the collimator lens 24a is reflected downward in the Z-axis direction orthogonal to the X and Y axes. The beam control unit 24 includes a condensing lens 24c for processing that focuses the laser beam LB reflected by the bend mirror 24b and irradiates the workpiece W with the focused laser beam LB. A coating is applied to the bend mirror 24b to reflect the wavelengths (for example, 1080 nm and 650 nm) of at least the laser beam LB and the guide beam GB.

The tip end of the laser processing head 22 is provided with a nozzle 25 having a circular aperture 25a for irradiating the workpiece W with the laser beam LB. The nozzle 25 removes the molten workpiece W. The nozzle 25 functions to blow a gas stream at a predetermined assist gas pressure equal to or greater than atmospheric pressure supplied from the assist gas supply device, together with the laser beam LB, onto the workpiece W. The nozzle 25 is detachably provided on the laser processing head 22.

The collimator lens 24a, bend mirror 24b, condensing lens 24c, and nozzle 25 are fixed in the laser processing head 22 with the optical axis adjusted in advance. Note that in order to adjust the focus position, a lens drive section (not illustrated) is provided in the beam control unit 24 to drive the collimator lens 24a in the direction (X-axis direction) parallel to the optical axis. Also, in order to adjust the focus position, the laser processing head 22 itself may be configured to move in the Z-axis direction orthogonal to the X-axis and Y-axis directions by a drive mechanism (not illustrated).

The X-ray fluorescence device 30 uses specific X-rays (fluorescent X-rays) generated by irradiating the workpiece NW with X-rays to perform analysis based on element-specific energies and perform quantitative analysis and the like of the elements in a metal. The X-ray fluorescence device 30 measures the surface of the workpiece NW before machining that has been mounted on the shuttle table 40, and acquires composition information representing the composition of the metal contained in the workpiece NW. The X-ray fluorescence device 30 outputs the acquired composition information to the machinability determination unit 50. The X-ray fluorescence device 30 acquires composition information about the workpiece NW in standby on the shuttle table 40. The X-ray fluorescence device 30 can perform the process of acquiring composition information while the preceding workpiece W is being processed, thereby reducing the overall processing time. However, the X-ray fluorescence device 30 may also be provided on the machining table 11 of the laser processing machine 10.

Note that, besides the X-ray fluorescence device 30, other analysis devices may also be used as the acquisition device, such as a laser-induced breakdown spectrophotometer (LIBS) spectral analysis device. The LIBS spectral analysis device uses a spectroscope to receive radiated light from high-temperature plasma generated by a short-pulse laser, and performs analysis based on the peak spectrum specific to each element to perform quantitative analysis and the like.

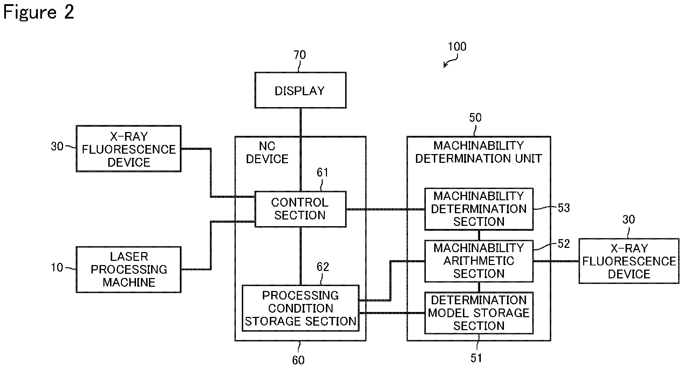

Next, the machinability determination unit 50 and the NC device 60 will be described. Figure 2 is a schematic functional block diagram of the machining system 100 according to the present embodiment.

As illustrated in Figure 2, the machinability determination unit 50 includes a determination model storage section 51, a machinability arithmetic section 52, and a machinability determination section 53.

The determination model storage section 51 stores, in a readable way, determination models for evaluating processing conditions, each being created according to at least one of the material and/or thickness of the workpiece W. The determination models are generated in advance by machine learning to be described later. Note that the determination models may also be stored in an external server, without being stored internally in the determination model storage section 51 of the machinability determination unit 50.

The machinability arithmetic section 52 assigns points (machinability points: score) as a machinability evaluation of the workpiece NW based on a determination model read from the determination model storage section 51 in accordance with material and thickness data in the processing conditions of the workpiece NW and the composition information about the workpiece NW acquired by the X-ray fluorescence device 30.

The machinability determination section 53 determines the machinability of the workpiece NW (Good: good cutting material, Fair: cuttable material, Poor: difficult-to-process material) based on the machinability score of the workpiece NW calculated by the machinability arithmetic section 52.

The NC device 60 includes a control section 61 that can output control instructions for various operations to the laser processing machine 10, the X-ray fluorescence device 30, and the machinability determination unit 50, as well as output display instructions for various information to the display 70, for example, based on a determination result from the machinability determination section 53. The NC device 60 includes a processing condition storage section 62 in which various processing conditions according to the material and thickness of the workpiece NW are stored in a storage device or the like. Note that processing conditions are set for each of the material and thickness of the workpiece W, and a plurality of processing conditions may also be provided in the NC device 60 in advance as standard processing conditions of standard specifications. In addition, the control section 61 may be configured to also output reporting instructions for various information, such as sound output and lighting, to a speaker and a lamp via an output I/F.

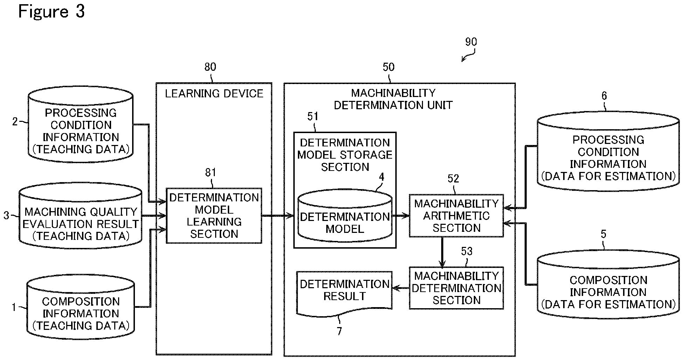

Figure 3 is a block diagram illustrating a schematic configuration of a machinability determination system used in the machining system according to the present embodiment.

As illustrated in Figure 3, a machinability determination system 90 according to an embodiment includes a learning device 80 and the machinability determination unit 50 included in the machining system 100. The learning device 80 may be provided internally to the machining system 100 or externally to the machining system 100. The learning device 80 includes a determination model learning section 81. In a learning process, three kinds of teaching data are input to the determination model learning section 81. The first kind is composition information 1 as an explanatory variable, which represents the chemical composition of the material of a workpiece acquired by the X-ray fluorescence device 30. The second kind is processing condition information 2 as an explanatory variable, which includes processing conditions according to the material and thickness of the workpiece, the processing conditions being selected from the processing condition storage section 62 of the NC device 60. The third kind is machining quality evaluation result 3 as an objective variable, which is obtained by actually processing the workpiece W with the laser processing machine 10 based on the selected processing conditions. The determination model learning section 81 accepts the input of the composition information 1, processing condition information 2, and machining quality evaluation result 3 as teaching data, performs machine learning based on the teaching data, and creates and outputs a determination model 4 for processing condition evaluation.

On the other hand, in an estimation process, two kinds of data for estimation are input to the machinability arithmetic section 52 of the machinability determination unit 50. The first kind is composition information 5, which is acquired by the X-ray fluorescence device 30 before the machining of a workpiece to be newly processed. The second kind is processing condition information 6, which includes processing conditions set in the NC device 60 according to the material and thickness of the workpiece. The machinability arithmetic section 52 accepts the input of the composition information 5 and processing condition information 6 as data for estimation, and uses the determination model 4 created by the learning device 80 to output a determination result 7 regarding machinability based on the processing conditions of the machining to be performed by the laser processing machine 10.

The composition information 1 input to the learning device 80 and the composition information 5 input to the machinability determination unit 50 indicate the weight percentages of elements contained on the surface of the workpieces W, NW, for example. The elements included in the composition information 1, 5 are, for example, the following 28 types: magnesium (Mg), aluminum (Al), silicon (Si), phosphorus (P), sulfur (S), titanium (Ti), vanadium (V), chromium (Cr), manganese (Mn), iron (Fe), cobalt (Co), nickel (Ni), copper (Cu), zinc (Zn), zirconium (Zr), niobium (Nb), molybdenum (Mo), palladium (Pd), silver (Ag), cadmium (Cd), tin (Sn), antimony (Sb), hafnium (Hf), tantalum (Ta), tungsten (W), rhenium (Re), lead (Pb), and bismuth (Bi). By referring to these types of elements and using information indicating the weight percentage of each element as the composition information 1, 5, the chemical composition of a workpiece can be sufficiently ascertained.

Furthermore, the processing condition information 2 input to the learning device 80 and the processing condition information 6 input to the machinability determination unit 50 include, for example, various processing conditions (laser power (peak power, repetition frequency, pulse width), machining velocity, focus position, and others) for cutting according to the material (mild steel, stainless steel, or the like) and thickness (19 mm, 22 mm, or the like) of the workpiece. Note that the energy density per hour imparted to a workpiece may be determined by the above processing conditions (the laser power (laser average power), focus position (spot diameter), and machining velocity).

The machining quality evaluation result 3 input to the learning device 80 includes, for example, an evaluation determined based on a quality evaluation standard, that is, an indicator for evaluating the cutting quality of a cut surface (machined area) of a pre-processed workpiece W from the appearance and shape thereof. In the present embodiment, the machining quality evaluation result 3 is given as points. Note that the explanatory variable and objective variable used in the machinability determination system 90 are not limited to the examples given above.

In the machine learning and determination in the learning device 80 and machinability determination unit 50, any of various algorithms can be used, such as random forest (RF), regression analysis (RA), principal component analysis (PCA), singular value decomposition (SVD), linear discriminant analysis (LDA), independent component analysis (ICA), Gaussian process latent variable model (GPLVM), logistic regression (LR), support vector machine (SVM), discriminant analysis (DA), ranking support vector machine (RSVM), gradient boosting (GB), naive Bayes (NB), K-nearest neighbor algorithm (K-NN), and neural network (NN).

### [Hardware configuration]

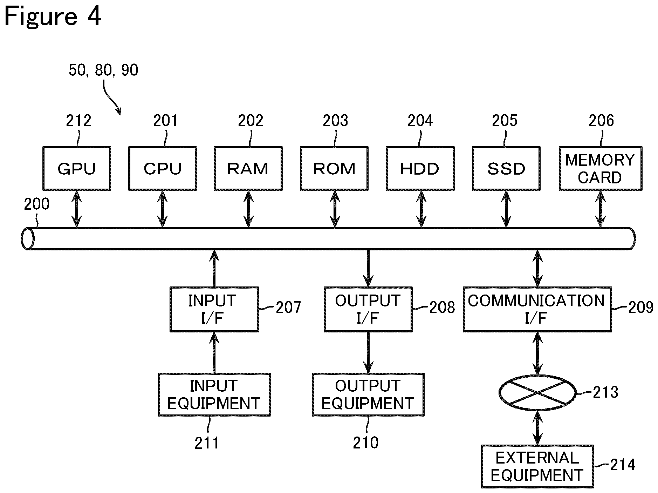

Figure 4 is an explanatory diagram illustrating a basic hardware configuration of the machinability determination unit 50, the learning device 80, and/or the machinability determination system 90.

As illustrated in Figure 4, the machinability determination unit 50, the learning device 80, and/or the machinability determination system 90 is achieved by hardware including, for example, a graphics processing unit (GPU) 212, a central processing unit (CPU) 201, random access memory (RAM) 202, read-only memory (ROM) 203, a hard disk drive (HDD) 204, a solid-state drive (SSD) 205, and a memory card 206.

The machinability determination unit 50, the learning device 80, and/or the machinability determination system 90 also includes, for example, an input interface (I/F) 207, an output interface (I/F) 208, and a communication interface (I/F) 209. The components 201 to 209 are connected to each other through a bus 200.

Input equipment 211 is connected to the input I/F 207, the input equipment 211 including various input devices, such as a keyboard, mouse, and touch panel, a measurement device such as the X-ray fluorescence device 30, and various sensors such as a temperature sensor, optical sensor, acoustic sensor, image sensor, and spectral sensor. Output equipment 210 is connected to the output I/F 208, output equipment 210 including such as the display 70, as well as a speaker and a lamp (not illustrated) that functions as a reporting section. The communication I/F 209 communicates the external equipment 214 such as a server over a network 213 such as the Internet.

### [Creation of determination model for processing condition evaluation]

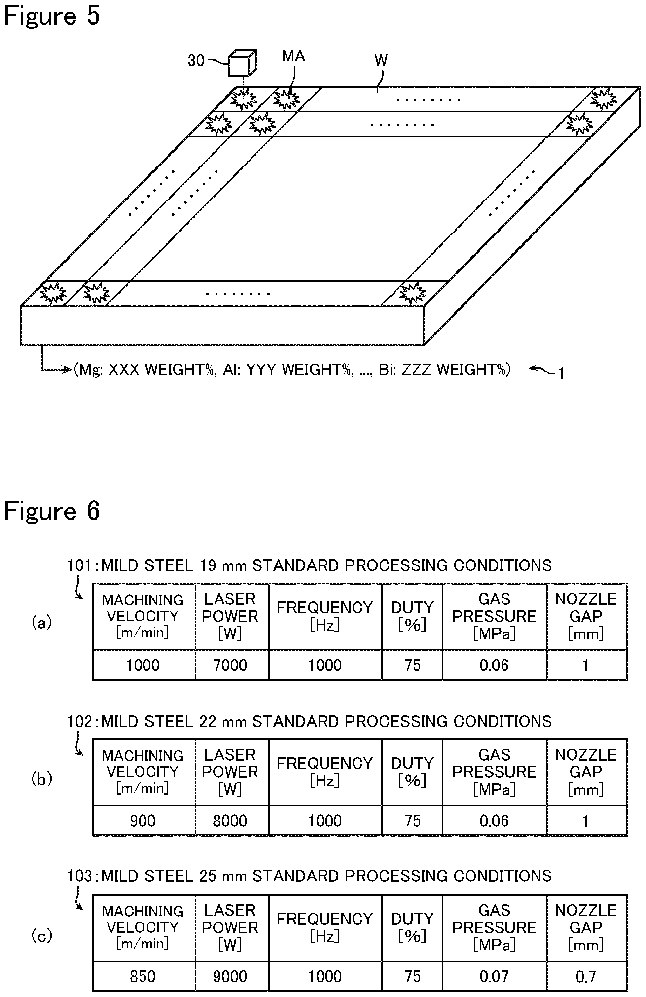

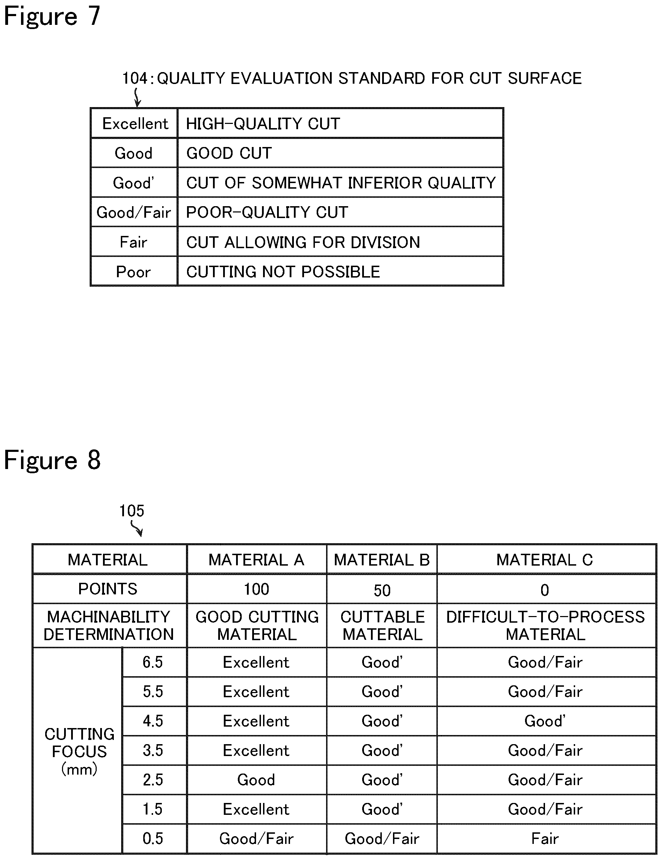

Figure 5 is an explanatory diagram illustrating how composition information about a workpiece is acquired. Figure 6 is a diagram illustrating examples of standard processing conditions for machining according to the material and thickness of a workpiece. Figure 7 is an explanatory diagram representing a quality evaluation standard for machining quality. Figure 8 is an explanatory diagram illustrating an example of an evaluation result. Note that in the following, laser cutting processing is described as the laser processing by the laser processing machine 10.

In the creation of the determination model 4 for processing condition evaluation, first, as illustrated in Figure 5, after each of a plurality of measurement areas MA located on the surface of the workpiece W, for example, is irradiated with X-rays by the X-ray fluorescence device 30, composition information (Mg: XXX weight%, Al: YYY weight%, ..., Bi: ZZZ weight%) 1 for each measurement area MA is measured and acquired. Note that for the workpiece W, 100-150 samples are prepared for each material, for example, 70% of which (70-105 samples) are used for learning, but the number of samples used is not limited to the above. By measuring and acquiring the composition information 1 for each of the plurality of measurement areas MA, the amount of teaching data for an explanatory variable in the learning phase can be increased.

In a machinability determination, this makes it possible to make a machinability determination based on the composition information 5 and the processing conditions of the processing condition information 6 while accounting for variations in the composition of the material at different positions in a single workpiece NW. The composition information 1 acquired by the X-ray fluorescence device 30 is input to the determination model learning section 81.

The determination model learning section 81 also accepts the input of the processing condition information 2 including the processing conditions of processing performed in the laser processing machine 10 according to the material and thickness of the workpiece W, which is read out from a storage device or the like by the processing condition storage section 62 of the NC device 60. Standard processing conditions according to the material and thickness of the workpiece W from among the processing conditions included in the processing condition information 2 are illustrated in Figure 6, for example.

That is, in the case where the material of the workpiece W is mild steel, for example, as illustrated in Figure 6(a), in standard processing conditions 101 for a thickness of 19 mm, the items of machining velocity (m/min), laser power (peak power) (W), pulse frequency (Hz), pulse duty (pulse width) (%), gas pressure (MPa), and nozzle gap (mm) are set to 1000, 7000, 1000, 75, 0.06, and 1, respectively. As illustrated in Figure 6(b), in standard processing conditions 102 for a thickness of 22 mm, the same items as above are set to 900, 8000, 1000, 75, 0.06, and 1, respectively. Furthermore, as illustrated in Figure 6(c), in standard processing conditions 103 for a thickness of 25 mm, the same items as above are set to 850, 9000, 1000, 75, 0.07, and 0.7, respectively. The cutting focus (focus position) in each of the standard processing conditions for different thicknesses of the same material is set to a standard value of 3.5 mm, for example.

Based on each of the standard processing conditions configured in this way, a plurality of workpieces W with composition information 1 having been acquired for each are cut multiple times by the laser processing machine 10 while varying the cutting focus (focus position) every time, for example. Alternatively, a plurality of conditions such as the machining velocity and the cutting focus may be changed. Thereafter, the cutting quality of the cut surface (machined area) of the workpiece W is evaluated based on the state thereof according to a quality evaluation standard 104 like the one illustrated in Figure 7.

In other words, a quality evaluation of "Excellent" indicates a high-quality cut, and a quality evaluation of "Good" indicates a good cut. A quality evaluation of "Good'" indicates a cut of somewhat inferior quality, and a quality evaluation of "Good/Fair" indicates a poorquality cut. Furthermore, a quality evaluation of "Fair" indicates a cut allowing for division, and a quality evaluation of "Poor" indicates that cutting is not possible. Note that the classifications of quality evaluation are not limited to these six evaluation ranges and may also be classified to allow for more detailed evaluations.

Additionally, when there are two or more "Excellent" quality evaluations, or three quality evaluations of "Good" or better, "good cutting material: Good" is assessed, and a points evaluation of 100 is given. When there are two or more quality evaluations of "Good'" or better, "cuttable material: Fair" is assessed, and a points evaluation of 50 is given. Furthermore, when there are fewer than two quality evaluations of "Good'" or better, "difficult-to-process material: Poor" is assessed, and a points evaluation of 0 is given.

Figure 8 is a diagram illustrating an example of an evaluation result 105 of evaluating the cutting quality of cuts made by varying only the cutting focus (focus position) under the selected processing conditions based on the quality evaluation standard 104 as above. In Figure 8, for example, the case of a workpiece (material A) from manufacturer A includes five "Excellent" evaluations and one "Good" evaluation for a cutting focus ranging from 0.5 mm to 6.5 mm, and thus material A is evaluated as "good cutting material: Good" and given a points evaluation of 100. The case of a workpiece (material B) from manufacturer B includes six "Good'" evaluations for a cutting focus ranging from 0.5 mm to 6.5 mm, and thus material B is evaluated as "cuttable material: Fair" and given a points evaluation of 50. Furthermore, the case of a workpiece (material C) from manufacturer C includes only one evaluation of "Good'" or better for a cutting focus ranging from 0.5 mm to 6.5 mm, and thus material C is evaluated as "difficult-to-process material: Poor" and given a points evaluation of 0.

Additionally, such points evaluations are performed on a plurality of samples and in multiple areas. In this way, the machining quality evaluation result 3, including a quality evaluation (points evaluation) of cutting quality graded into several different numerical values of 100, 50, and 0, is input as teaching data for an objective variable to the determination model learning section 81, along with the composition information 1 and the processing condition information 2 which are teaching data for an explanatory variable. In the determination model learning section 81, the relationship between the composition information 1 and processing condition information 2 at the time of obtaining the machining quality evaluation result 3 and the machining quality evaluation result 3 is learned by machine learning to create determination models 4 for processing condition evaluation. Thereafter, the determination model storage section 51 stores, in a storage device or the like, determination models 4 for processing condition evaluation, each being created according to the material and thickness of the workpiece W. In the learning device 80, determination models 4 for processing condition evaluation are created in this way in the learning phase.

Note that the machining quality evaluation obtained by varying the cutting focus or varying the cutting focus and the machining velocity means the "margin" of machining quality with respect to variation of the cutting focus or variation of the cutting focus and the machining velocity. When the machining device is the laser processing machine 10, this "margin" affects the energy density of the laser beam striking the cutting front head on the material surface of the work piece W, the degree of heat input in the cutting front depending on where the beam waist position strikes in the thickness direction, and the viscosity of the melt metal at the cutting front bottom. Additionally, "standard processing conditions" may also be selected to be the processing conditions (excluding the cutting focus or the cutting focus and the machining velocity) with the largest "margin", for example. Such "standard processing conditions" may also be successively updated by machine learning. According to the determination model 4 created in this way, the processing conditions with the larger of the above margin can be evaluated as better.

### [Machinability evaluation according to determination model]

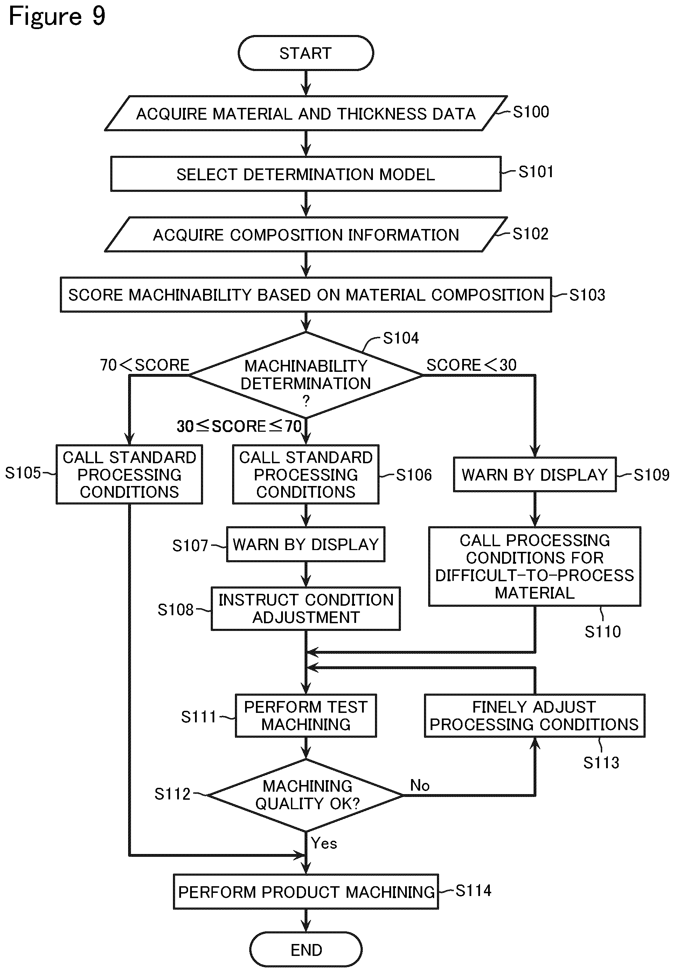

Figure 9 is a flowchart illustrating an example of a machinability determination.

As illustrated in Figure 9, before the machining of the workpiece NW that is scheduled to be machined next, first, in the NC device 60, material and thickness data about the workpiece NW on the shuttle table 40 is acquired (step S100) and transmitted to the determination model storage section 51 of the machinability determination unit 50.

Next, based on the transmitted material and thickness data, a determination model 4 for the processing conditions of the workpiece NW corresponding to the material and thickness is selected in the determination model storage section 51 (step S101) and transmitted to the machinability arithmetic section 52 together with processing conditions. Additionally, composition information 5 about the workpiece NW is acquired through measurement by the X-ray fluorescence device 30 (step S102) and transmitted to the machinability arithmetic section 52.

The machinability arithmetic section 52 inputs processing condition information 6 about processing conditions, including the above material and thickness data, and the acquired composition information 5 to the selected determination model 4, and makes a machinability evaluation of the workpiece NW. The machinability evaluation is made by scoring machinability based on the composition of the material of the workpiece NW as a numerical value from 0 to 100, for example (step S103).

In addition, the machinability determination section 53 determines the machinability (Good, Fair, and Poor) of the workpiece NW scored by the machinability arithmetic section 52 (step S104) and transmits a determination result to the control section 61 of the NC device 60. The machinability evaluation included in the determination result from the machinability determination section 53 may express, using a score as above, the margin of adaptation to the workpiece NW by processing conditions. For example, when the score of the machinability evaluation in the determination result is greater than 70 ("70 < score" in step S104), the machinability is determined to be that the workpiece NW made according to the acquired composition information 5 is a good cutting material (Good).

When the score of the machinability evaluation in the determination result is equal to or greater than 30 and less than or equal to 70 ("30 ≤ score ≤ 70" in step S104), the machinability is determined to be that the workpiece NW made according to the acquired composition information 5 is a cuttable material (Fair). Furthermore, when the score of the machinability evaluation in the determination result is less than 30 ("score < 30" in step S104), the machinability is determined to be that the workpiece NW made according to the acquired composition information 5 is a difficult-to-process material (Poor).

In step S104 above, if a machinability determination of a good cutting material (Good) is made ("70 < score" in step S104), standard processing conditions are called from the processing condition storage section 62 by the control section 61 (step S105) and the workpiece NW is loaded from the shuttle table 40 to the laser processing machine 10 as the workpiece W.

Thereafter, product machining of the workpiece W based on the called standard processing conditions is performed (step S114), and the series of processes according to the present flowchart ends. Note that when standard processing conditions are called in step S105, information announcing the calling of the standard processing conditions may be displayed on the display 70, for example, to report to the operator. This arrangement enables the operator to easily understand the processing conditions set for product machining, and easily decide whether machining should be performed under the current processing conditions or the processing conditions should be changed to suit to the workpiece.

On the other hand, in step S104 above, if a machinability determination of a cuttable material (Fair) is made ("30 ≤ score ≤ 70" in step S104), standard processing conditions are called from the processing condition storage section 62 by the control section 61 (step S106). At this time, information announcing the calling of the standard processing conditions may be displayed on the display 70, for example, to report to the operator in the same way as above.

Moreover, in the case of a cuttable material (Fair), the cutting quality potentially can be improved by adjusting parameters such as the laser power, machining velocity, and cutting focus (focus position) included in the standard processing conditions, for example. Accordingly, a warning to that effect is displayed on the display 70 as information encouraging test machining by the laser processing machine 10 (step S107), and instructions on condition adjustment of the processing conditions (adjustment of the machining velocity, laser power, focus position, and the like) are output as an example of information encouraging the execution of either adjustment or change of the processing conditions (step S108). This arrangement enables the operator to easily understand the need for adjustment of the processing conditions set for product machining and test machining, and easily decide whether machining should be performed under the current processing conditions or the processing conditions should be changed to suit to the workpiece. Note that condition adjustment may be performed by adjusting the parameters of each item of the processing conditions.

The operator adjusts the processing conditions by operation input via the input equipment 211 such as the touch panel, for example, based on the warning and instructions on condition adjustment displayed on the display 70 in this way, and test machining based on the adjusted processing conditions is performed by the control section 61 (step S111).

Note that in step S104 above, if a machinability determination of a difficult-to-process material (Poor) is made ("score < 30" in step S104), cutting of a difficult-to-process material (Poor) may be possible by performing cutting based on, for example, adjusted parameters such as the laser power, machining velocity, and cutting focus (focus position) included in the processing conditions of the difficult-to-process material, as well as optical characteristics. Accordingly, a warning to that effect is displayed on the display 70 by the control section 61 as information encouraging test machining by the laser processing machine 10 (step S109). Thereafter, processing conditions for difficult-to-process materials are called from the processing condition storage section 62 (step S110). At this time, information announcing the calling of processing conditions for difficult-to-process materials may be displayed on the display 70, for example, to report to the operator. This enables the operator to easily understand and decide that in product machining, machining should not be performed under the current processing conditions and the processing conditions should be changed to suit to the workpiece (difficult-to-process material), and that the set processing conditions are for difficult-to-process materials.

In other words, in the case of a difficult-to-process material (Poor), besides the items (machining velocity, laser power, and the like) in the processing conditions which are adjustable in the above condition adjustment, the optical characteristics of the laser processing head 22, such as the spot diameter (for example, changing from **Φ**720 µm to **Φ**560 µm), need to be adjusted by the beam control unit 24. Changing optical characteristics such as the spot diameter makes adjustment of processing conditions extremely complex and therefore requires more experienced skill. Additionally, adjustments by the operator are not recommended, because changing optical characteristics can cause significant damage to the laser processing machine 10 itself.

Consequently, in step S110 above, optical characteristics and processing conditions for difficult-to-process materials with pre-adjusted items are called automatically, for example. Thereafter, test machining based on the processing conditions for difficult-to-process materials is performed by the control section 61 (step S111).

Note that in the display of a warning in step S109, after alerting the operator, as encouragement information encouraging the execution of either adjustment or change of the processing conditions, the information encouraging at least one of focus position adjustment and/or machining velocity adjustment is reported, for example, if adjustment of the processing conditions is possible for adaptation. Additionally, an adaptable arrangement may also be possible in which test machining is performed after processing conditions are adjusted through operation input by the operator as described above.

After the test machining is performed in step S111, the state of the cut surface and the like are checked to assess whether the machining quality is OK (step S112), and if the machining quality is assessed to be OK (Yes in step S112), the flow proceeds to step S114 above, product machining of the workpiece W is performed, and the series of processes according to the present flowchart ends. Note that the assessment in step S112 may be assessed automatically through image processing or the like of the surface state of the cut surface obtained by a sensor, or manually through operation input or the like by the operator upon checking the cut surface.

On the other hand, if the machining quality is assessed to be not OK (No in step S112), the parameters of the processing conditions (standard processing conditions, processing conditions after condition adjustment, or processing conditions for difficult-to-process materials) set in the laser processing machine 10 are finely adjusted through operation input by the operator, for example (step S113), test machining is performed again (step S111), and the subsequent processes are repeated. Note that besides operation input by the operator, the fine adjustment of processing conditions in step S113 may also be performed as follows, for example.

That is, in the learning phase described above, a determination model 4 is created by performing machine learning in advance using the (acquisition of) material and thickness data, the (calling of) processing conditions, the (acquisition of) composition information, and the machinability determination (score of machinability evaluation) as teaching data for an explanatory variable and using the amount of change for each item of the machining velocity, laser power, and focus position of the processing conditions as teaching data for an objective variable.

Then, at the start of test machining, fine adjustment may be performed by inputting the (acquisition of) material and thickness data, the (calling of) processing conditions, the (acquisition of) composition information, and the machinability determination (score of machinability evaluation) again as data for estimation of an explanatory variable to the determination model 4, and causing the parameters of the processing conditions to reflect an estimation amount for each item of the machining velocity, laser power, and focus position of the processing conditions obtained as an objective variable.

By operating in this way, the machinability determination system 90 can determine machinability based on the processing conditions of the workpiece NW before machining and change response (for example, performing machining under standard processing conditions or changing to processing conditions suited to the workpiece NW) in accordance with the content of the determination result, which includes a machinability evaluation representing the margin of adaptation to the workpiece NW by the processing conditions. Thus, an improvement in machining quality can be attained quickly and easily, and as a result, processing defects can be reduced.

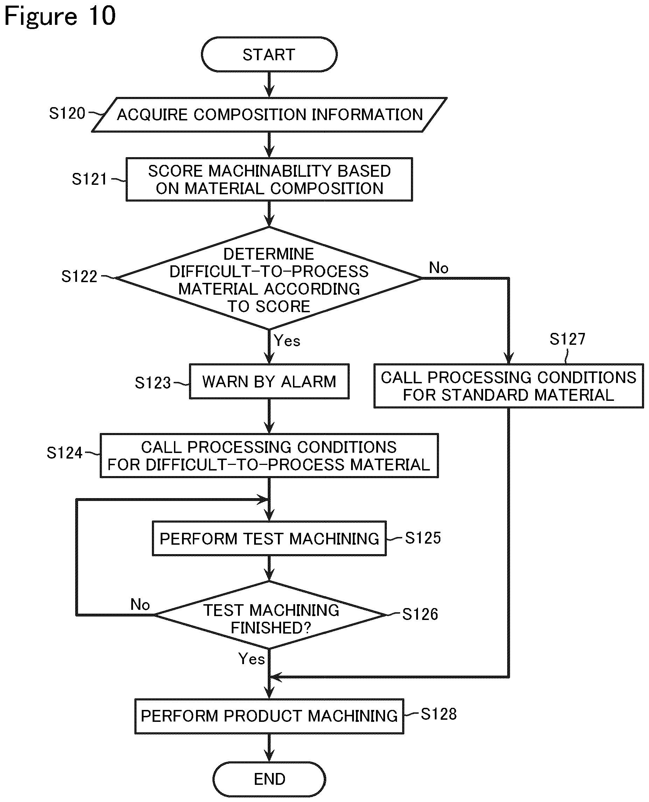

Figure 10 is a flowchart illustrating another example of a machinability determination. Note that the present flowchart describes operations focusing on the determination of difficult-to-process materials as the machinability determination. The following assumes that processing conditions, including material and thickness data according to the workpiece NW, and the determination model 4 corresponding to the processing conditions have been transmitted by the NC device 60 to the machinability arithmetic section 52 from the processing condition storage section 62 and the determination model storage section 51.

As illustrated in Figure 10, before the machining of the workpiece NW that is scheduled to be machined next, composition information 5 about the workpiece NW is acquired through measurement by the X-ray fluorescence device 30 (step S120) and transmitted to the machinability arithmetic section 52. The machinability arithmetic section 52 inputs processing condition information 6 about processing conditions, including the above material and thickness data, and the acquired composition information 5 to the selected determination model 4, and scores a machinability evaluation of the workpiece NW as a numerical value from 0 to 100, for example, based on the composition of the material of the workpiece NW (step S121).

Then, the machinability determination section 53 determines that the workpiece NW scored by the machinability arithmetic section 52 is a difficult-to-process material (Poor) according to the score (step S122) and transmits a determination result to the control section 61 of the NC device 60. At this point, the workpiece NW made according to the acquired composition information 5 is determined to be a difficult-to-process material (Poor) or not according to whether the score of the machinability evaluation in the determination result is less than 30, for example.

If the score is less than 30 and the workpiece NW is determined to be a difficult-to-process material (Yes in step S122), a warning to that effect is reported by outputting an alarm sound from a speaker, for example, as information encouraging test machining by the laser processing machine 10 (step S123). In addition, processing conditions for difficult-to-process materials are called from the processing condition storage section 62 by the control section 61 (step S124). At this time, information announcing the calling of processing conditions for difficult-to-process materials may be displayed on the display 70, for example, to report to the operator.

Thereafter, the control section 61 performs test machining based on the processing conditions for difficult-to-process materials (step S125), waits for the test machining to finish (No in step S126), and when the test machining finishes (Yes in step S126), loads the workpiece NW from the shuttle table 40 to the laser processing machine 10 as the workpiece W. Thereafter, product machining of the workpiece W based on the called processing conditions for difficult-to-process materials is performed (step S128), and the series of processes according to the present flowchart ends.

On the other hand, in step S122 above, if the workpiece NW is determined not to be a difficult-to-process material (No in step S122), the control section 61 calls processing conditions for standard materials (good cutting materials, cuttable materials) from the processing condition storage section 62 (step S127), loads the workpiece NW as the workpiece W similarly to the above, performs product machining of the workpiece W based on the called processing conditions for standard materials (step S128), and ends the series of processes according to the present flowchart. When processing conditions are called in step S127 above, information announcing the calling of the processing conditions for standard materials may be displayed on the display 70, for example, to report to the operator.

Since the machinability determination system 90 can also operate in this way, the machinability determination system 90 can determine a difficult-to-process material based on the processing conditions of the workpiece NW before machining and easily change response (for example, changing to processing conditions for difficult-to-process materials) in accordance with the content of the determination result. Therefore, an improvement in machining quality and a reduction in processing defects can be attained for machining in cases where the workpiece is determined to be a difficult-to-process material.

### [Implementation example]

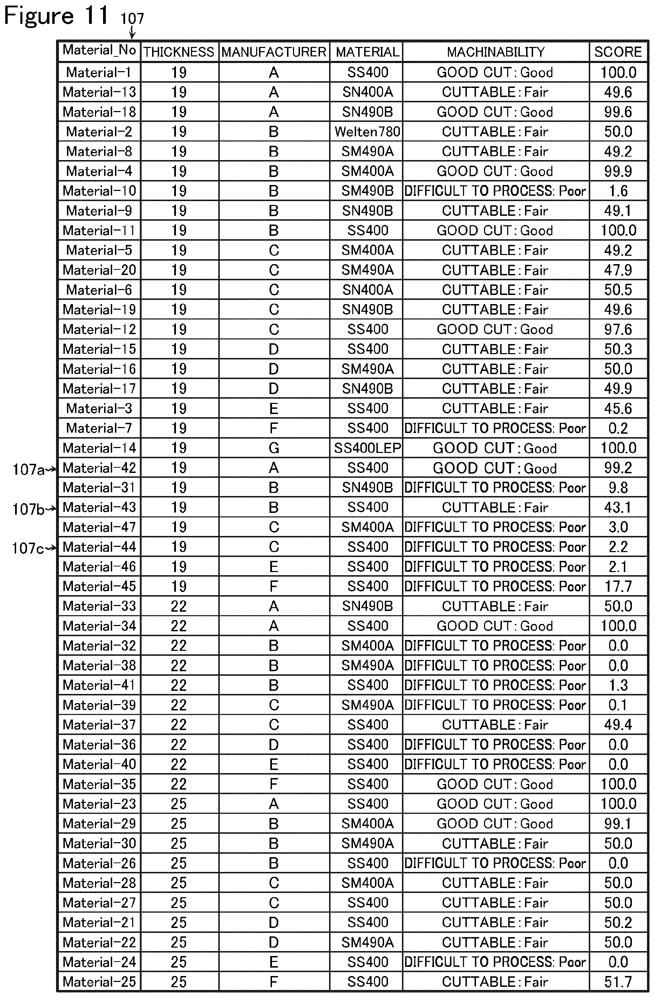

Figure 11 is a diagram illustrating verification results 107 regarding machinability determinations.

In order to verify machinability determinations in the machinability determination system 90, the applicant prepared 30 samples for each of more than 47 different workpieces NW with different materials, thicknesses, and production lots, for example, acquired the composition information 5 for each, performed machinability evaluations using the machinability determination unit 50, and calculated the averages as scores.

The results verify that, for example, Material-12 and Material-44 in Figure 11 have the same thickness of 19 mm and the same material SS400, and are provided by the same manufacturer C, but have widely different scores of 97.6 and 2.2, respectively, due to the different composition information 5. Thus, the verification of machinability evaluations confirms that even with the same thickness, the same material, and the same manufacturer, different samples will have different composition information 5 and thus different scores, as illustrated in Figure 11.

Next, from among the verification results 107, Material-42 with a score of 99.2 indicated by verification result 107a in Figure 11, Material-43 with a score of 43.1 indicated by verification result 107b, and Material-44 with a score of 2.2 indicated by verification result 107c were actually subjected to cutting processing and the quality of each cut surface was assessed.

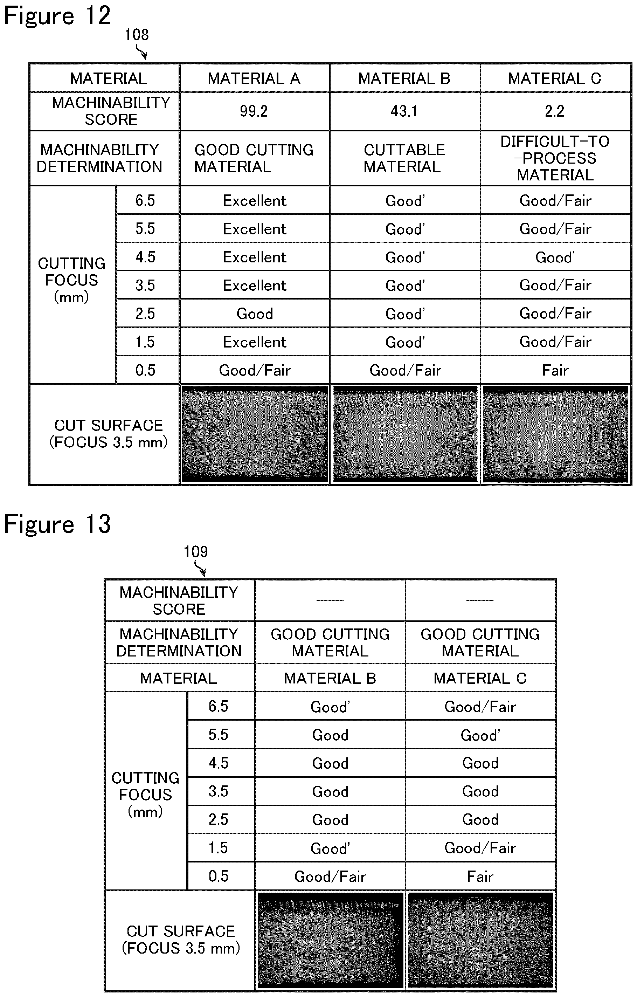

Figure 12 is a diagram illustrating confirmation results 108 regarding the quality of a cut surface.

As illustrated in Figure 12, for a material A with a score of 99.2 and its machinability determined to be a good cutting material (Good), five "Excellent" evaluations and one "Good" evaluation are included in the cutting focus range from 0.5 mm to 6.5 mm under standard processing conditions for a thickness of 19 mm. Accordingly, the margin of adaptation of processing conditions is large, and the material A was confirmed to be a "good cutting material: Good" (points evaluation of 100).

Also, as illustrated in Figure 12, for a material B with a score of 43.1 and its machinability determined to be a cuttable material (Fair), six "Good'" evaluations are included in the cutting focus range from 0.5 mm to 6.5 mm under standard processing conditions for a thickness of 19 mm. Accordingly, the margin of adaptation of processing conditions is smaller than that for the material A, and the material B was confirmed to be a "cuttable material: Fair" (points evaluation of 50).

Also, as illustrated in Figure 12, for a material C with a score of 2.2 and its machinability determined to be a difficult-to-process material (Poor), only one evaluation of "Good'" or better is included in the cutting focus range from 0.5 mm to 6.5 mm under standard processing conditions for a thickness of 19 mm. Accordingly, the margin of adaptation of processing conditions is even smaller than that for the material B, and the material C was confirmed to be a "difficult-to-process material: Poor" (points evaluation of 0).

In this way, the machinability determination results 7 from the machinability determination system 90 and the confirmation results of actual cut surfaces were confirmed to be substantially in agreement. Such results prove that the machinability determination system 90 is capable of substantially accurate determination of machinability based on the (margin of adaptation of) processing conditions of the workpiece NW before machining.

Note that, as an example of changing the response in accordance with content of a determination result, Figure 13 illustrates results in which, for the material B (cuttable material: Fair) and the material C (difficult-to-process material: Poor) for both of which the determination result is not a good cutting material (Good), the parameters of any items in the standard processing conditions were adjusted based on the margin of adaptation of the processing conditions, and a selection of machinability determination results were compared to the confirmation results of cut surfaces obtained by actual machining. Note that in Figure 13, the machinability scores are omitted.

Figure 13 is a diagram illustrating determination results and confirmation results.

In the confirmation results 109 in Figure 13, the material B was determined to be a good cutting material (Good) through adjustment of processing conditions. For this material B, the cutting quality did not change when the cutting focus was 0.5 mm, 1.5 mm, and 6.5 mm, but in the cutting focus range from 2.5 mm to 5.5 mm, the cutting quality improved from "Good'" to "Good", resulting in three or more "Good". This enabled machining with a cutting quality of "Good (good cut)", which is sufficient quality for product machining. In this way, adjusting the processing conditions for the material B was also confirmed to increase the margin of adaptation and obtain cutting quality sufficient for product machining.

Likewise, the material C was also determined to be a good cutting material (Good) through adjustment of processing conditions. For this material C, the cutting quality did not change when the cutting focus was 0.5 mm, 1.5 mm, and 6.5 mm, but the cutting quality clearly improved in the cutting focus range from 2.5 mm to 5.5 mm. In other words, in the cutting focus range from 2.5 mm to 4.5 mm, the cutting quality improved from "Good/Fair" or "Good'" to "Good", and when the cutting focus was 5.5 mm, the cutting quality improved from "Good/Fair" to "Good'", resulting in three or more "Good". This enabled machining with a cutting quality of "Good (good cut)", which is sufficient quality for product machining. In this way, adjusting the processing conditions for the material C was also confirmed to increase the margin of adaptation and obtain cutting quality sufficient for product machining.

Consequently, it was verified that by adjusting the processing conditions according to machinability determination results from the machinability determination system 90, the machining quality according to the determination results 7 and the confirmation results of actual cut surfaces were proven to be improved and in substantial agreement with each other, and an improvement in machining quality can be expected. This was found to be sufficient to contribute to the prevention of processing defects.

Note that in the above example, the machining system 100 and the machinability determination system 90 determine machinability based on the processing conditions of a workpiece before machining, thereby facilitating the decision of whether the workpiece should be machined under the current processing conditions or the processing conditions should be changed to suit to the workpiece, based on the determination result. On the other hand, for example, standard processing conditions are not necessarily the most suitable processing conditions for a workpiece. Consequently, the ability to adjust the processing conditions as appropriate is desirable. The machining system 100 and the machinability determination system 90 may also be configured to ascertain the cutting quality when, for example, the cutting focus (focus position) described above is changed from a standard value to a value away from the standard value on the in-focus side and/or defocus side under standard machining conditions. It is also possible to similarly change the machining velocity and ascertain the cutting quality. Accordingly, the cutting quality with respect to the cutting focus and the machining velocity may be displayed together with the determination result on the display 70, and based on which the operator can easily adjust the focus position or adjust the machining velocity.

In addition, the machining system 100 and the machinability determination system 90 may also be configured to make a machinability determination based on the processing conditions of machining to be performed by a machining device by using a determination model 4 created through machine learning using the composition information 1 about the workpiece NW and the machining quality evaluation result 3 obtained according to the material and thickness as teaching data, and inputting composition information 5 acquired before machining as data for estimation to the determination model 4.

The foregoing describes an embodiment of the present invention, but this embodiment is presented as an example and is not intended to limit the scope of the invention. This novel embodiment can be carried out in various other forms, and a variety of omissions, substitutions, and alterations are possible within a scope that does not depart from the gist of the invention. These embodiments and modifications thereof are included in the scope and gist of the invention, and are also included in the scope of the invention as described in the claims and their equivalents.

## Claims

1. A machining system comprising:
a machining device configured to machine a workpiece;
an acquisition device configured to acquire composition information representing the chemical composition of the material of the workpiece; and
a determination device configured to determine the machinability of the workpiece based on a determination model created by inputting the composition information about the workpiece acquired by the acquisition device, processing condition information including processing conditions of the machining device preset according to the material and thickness of the workpiece, and a machining quality evaluation result obtained by actually machining the workpiece based on the processing conditions, as teaching data, and performing machine learning based on the teaching data, wherein
the determination device is configured to input composition information acquired by the acquisition device before the machining of a workpiece to be newly machined and processing condition information including processing conditions set in the machining device according to the material and thickness of the workpiece, as data for estimation, to the determination model, and output a determination result regarding machinability based on the processing conditions of the machining to be performed by the machining device.

2. The machining system according to claim 1, wherein
the determination device includes a reporting unit configured to report the determination result in at least one of a visible and/or audible manner, and
the determination result includes a machinability evaluation representing a margin of adaptation to the workpiece by the processing conditions.

3. The machining system according to claim 2, wherein
the machinability evaluation is classified according to preset evaluation ranges.

4. The machining system according to claim 2 or 3, wherein
the reporting unit is configured to report at least one selected from a group of information announcing a calling of processing conditions to be set in the machining device, information encouraging test machining by the machining device, and encouragement information encouraging execution of either adjustment or change of the processing conditions, based on the machinability evaluation, and
the encouragement information encourages at least one of focus position adjustment and/or machining velocity adjustment as the adjustment of the processing conditions.

5. The machining system according to any one of claims 1 to 4, wherein
the determination model is created for each of at least one of the material and/or the thickness of the workpiece.

6. The machining system according to any one of claims 1 to 5, wherein
the machining quality evaluation result includes a points evaluation of the machining quality of the workpiece graded into several different numerical values based on a quality evaluation standard representing the state of a machined area of the workpiece as determined by machining performed a plurality of times while changing the processing conditions included in the processing condition information every time.

7. The machining system according to any one of claims 1 to 6, wherein
the composition information is information indicating a weight percentage of an element contained in a material of the surface of the workpiece.

8. The machining system according to any one of claims 1 to 7, further comprising
a shuttle table which is adjacent to the machining device and on which the workpiece is mounted wherein
the acquisition device is configured to acquire the composition information about the workpiece mounted on the shuttle table.

9. The machining system according to any one of claims 1 to 8, wherein
the acquisition device is an X-ray fluorescence device or a LIBS spectral analysis device,
the machining device is a laser processing machine, and
the processing condition information includes at least one of the following processing conditions:
material of workpiece, thickness of the workpiece, machining velocity of the workpiece, laser power, pulse frequency, pulse duty, assist gas pressure, nozzle gap, and focus position.

10. The machining system according to claim 9, wherein
the focus position includes a standard value according to the material and thickness of the workpiece, and a value away from the standard value on the in-focus side and/or defocus side.

11. A machinability determination system comprising:
a learning device configured to create a determination model by inputting composition information about a workpiece acquired by an acquisition device configured to acquire composition information representing the chemical composition of the material of the workpiece, processing condition information including processing conditions of a machining device preset according to the material and thickness of the workpiece, and a machining quality evaluation result obtained by actually machining the workpiece based on the processing conditions, as teaching data, and performing machine learning based on the teaching data; and
a determination device configured to input composition information acquired by the acquisition device before the machining of a workpiece to be newly machined and processing condition information including processing conditions set in the machining device according to the material and thickness of the workpiece as data for estimation, to the determination model created by the learning device, and output a determination result regarding machinability based on the processing conditions of the machining to be performed by the machining device.

12. A machining system comprising:
a machining device configured to machine a workpiece;
an acquisition device configured to acquire composition information representing the chemical composition of the material of the workpiece; and
a determination device configured to determine the machinability of the workpiece based on a determination model created by inputting the composition information about the workpiece acquired by the acquisition device and a machining quality evaluation result obtained by actually machining the workpiece based on processing conditions of the machining device preset according to the material and thickness of the workpiece, as teaching data, and performing machine learning based on the teaching data, wherein
the determination device is configured to input composition information acquired by the acquisition device before the machining of a workpiece to be newly machined as data for estimation, to the determination model, and output a determination result regarding machinability based on the processing conditions of the machining to be performed by the machining device.

13. A machinability determination system comprising:
a learning device configured to create a determination model by inputting composition information about a workpiece acquired by an acquisition device configured to acquire composition information representing the chemical composition of the material of the workpiece, and a machining quality evaluation result obtained by actually machining the workpiece based on processing conditions of a machining device preset according to the material and thickness of the workpiece, as teaching data, and performing machine learning based on the teaching data; and
a determination device configured to input composition information acquired by the acquisition device before the machining of a workpiece to be newly machined as data for estimation, to the determination model created by the learning device, and output a determination result regarding machinability based on the processing conditions of the machining to be performed by the machining device.
